# EUROPÄISCHE PATENTANMELDUNG

(11) **EP 2 732 861 A1**
(43) Veröffentlichungstag der Anmeldung: **21.05.2014**
(21) Anmeldenummer: 13184033.2
(22) Anmeldetag: 12.09.2013
(51) Int. Cl.: B01D 11/02, B29B 17/02, C08J 11/08

(54) **Verfahren und Vorrichtung zum Entfernen von Fremdstoffen aus Polymeren**

(30) Priorität: 14.11.2012 DE 102012220785
(71) Anmelder: Krones AG, 93073 Neutraubling (DE)
(72) Erfinder: Friedlaender, Thomas, 93073 Neutraubling (DE)
(74) Vertreter: Grünecker, Kinkeldey, Stockmair & Schwanhäusser

(57) **Zusammenfassung**

Die Erfindung betrifft ein Verfahren zum Entfernen eines Fremdstoffs aus einer Polymerzusammensetzung, umfassend die Schritte: Beaufschlagen der Polymerzusammensetzung mit einem Medium, ausgewählt aus der Gruppe, umfassend chemische Reagenzien, Elektronenstrahlung, elektromagnetische Strahlung, oder Mischungen davon; Entfernen des umgewandelten Fremdstoffs aus der Polymerzusammensetzung, wobei durch das Beaufschlagen der Polymerzusammensetzung mit dem Medium der Fremdstoff zumindest teilweise in eine Form umgewandelt wird, die ein Entfernen aus der Polymerzusammensetzung erleichtert. Weiter betrifft die Erfindung eine Vorrichtung zum Entfernen eines Fremdstoffs aus einer Polymerzusammensetzung, umfassend: ein Mittel zum Beaufschlagen der Polymerzusammensetzung mit einem Medium, ausgewählt aus der Gruppe umfassend chemische Reagenzien, Elektronenstrahlung, elektromagnetische Strahlung, oder Mischungen davon, sowie ein Mittel zum Entfernen des umgewandelten Fremdstoffs aus der Polymerzusammensetzung, wobei durch das Mittel zum Beaufschlagen der Polymerzusammensetzung mit dem Medium der Fremdstoff zumindest teilweise in eine Form umgewandelt wird, die ein Entfernen aus der Polymerzusammensetzung erleichtert.

## Beschreibung

Die Erfindung bezieht sich auf ein Verfahren zum Entfernen eines Fremdstoffs aus einer Polymerzusammensetzung nach dem Oberbegriff von Anspruch 1. Weiter bezieht sich die Erfindung auf eine Vorrichtung zum Entfernen eines Fremdstoffs aus einer Polymerzusammensetzung nach dem Oberbegriff von Anspruch 12, sowie auf die Verwendung eines Mediums in einem Verfahren oder in einer Vorrichtung zum Entfernen eines Fremdstoffs aus einer Polymerzusammensetzung nach dem Oberbegriff von Anspruch 15.

Polymerzusammensetzungen finden vielfältige Anwendungen zum Beispiel als Verpackungsmaterialien insbesondere für Lebensmittel. Dabei werden häufig Polymerzusammensetzungen verwendet, bei denen die Polymere mit verschiedensten Fremdstoffen versetzt sind, um die Materialeigenschaften zu verbessern. Hier sind insbesondere Füllstofife, wie Pigmente, Barrierematerialien o.ä., zu erwähnen. Weiter können Fremdstoffe aus dem zu verpackenden Gut in die Polymerzusammensetzung gelangen. Fremdstoffe, wie z.B. Abbauprodukte der Polymere, können sich auch während der Herstellung, Verwendung, oder während des Recyclingprozesses in den Polymerzusammensetzungen anreichern.

Vor dem Hintergrund der Knappheit von fossilen Rohstoffen werden polymere Materialien wie Verpackungsmaterialien vermehrt wiederverwertet. Beim Recyclingprozess werden die Polymerzusammensetzungen im allgemeinen gesammelt, durch mechanische und physikalische Trennverfahren nach Materialtypen sortiert, dann in kleinere Stücke, den sogenannten Polymerfiakes, zerschnitten und gewaschen. Diese Polymerflakes stellen ein Zwischenprodukt beim Recyclingprozess dar, und werden wieder in Polymergranulat überführt, das erneut in beliebige Produkte, wie z.B. Lebensmittelverpackungen, umgeformt werden kann. Allerdings stellt der Verbleib von Fremdstoffen im Recyclat ein Problem dar, da diese Fremdstoffe die Qualität und Wiederverwendbarkeit des Recyclats beinträchtigen können.

Eine herkömmliche Methode, Fremdstoffe aus Polymerzusammensetzungen abzutrennen, wird z.B. in der DE 10 2010 019 824 A1 beschrieben. In dieser Druckschrift wird ein Verfahren zur Rückgewinnung von Kunststoffrecyclaten aus zerkleinerten Kunststoffabfällen gezeigt, bei der die Kunststoffabfälle mit einem organischen Lösemittel behandelt werden, um insbesondere niedermolekulare organische Fremdstoffe aus dem Material abzutrennen.

Weiter können mit den Verfahren aus dem Stand der Technik flüchtige Fremdstoffe aus Polymerflakes zumindest zum Teil vom Recyclat abgetrennt werden, wenn bei der Wiederaufbereitung des Polymerrecyclats Prozessschritte durchgeführt werden, die bei hoher Temperatur und bei geringen Drücken erfolgen. Hier ist insbesondere die Festphasenkondensation von PET-Flakes zu nennen, die oftmals durchgeführt wird, um die intrinsische Viskosität des PET-Materials zu erhöhen, und bei der flüchtige Fremdstoffe aus dem PET zumindest zum Teil entweichen und so abgetrennt werden können.

Mit den bekannten Verfahren ist es allerdings oft nicht möglich, alle Arten von Fremdstoffen effektiv und schnell aus Polymerzusammensetzungen abzutrennen.

Somit liegt die Aufgabe der Erfindung in der Bereitstellung eines Verfahrens und in einer Vorrichtung zum Entfernen eines Fremdstoffs aus einer Polymerzusammensetzung, bei dem Fremdstoffe schnell und effektiv aus der Polymerzusammensetzung abtrennt werden können, wobei sich der energetische und apparative Aufwand für das Abtrennen des Fremdstoffs reduzieren lässt.

Diese Aufgabe wird mit dem Verfahren nach Anspruch 1 gelöst. Bevorzugte Ausführungsformen des Verfahrens sind in den Unteransprüchen 2 bis 11 beschrieben, die jeweils in Kombination miteinander umfasst sind. Weiter wird die Aufgabe durch eine Vorrichtung nach Anspruch 12 gelöst. Bevorzugte Ausführungsformen sind in den Ansprüchen 13 und 14 beschrieben, die in Kombination miteinander umfasst sind. Weiter wird die Aufgabe durch die Verwendung nach Anspruch 15 gelöst.

Das erfindungsgemäße Verfahren zum Entfernen eines Fremdstoffs aus einer Polymerzusammensetzung umfasst die Schritte: Beaufschlagen einer Polymerzusammensetzung mit einem Medium, ausgewählt aus der Gruppe, umfassend chemische Reagenzien, Elektronenstrahlung, elektromagnetische Strahlung, oder Mischungen davon, sowie das Entfernen des umgewandelten Fremdstoffs aus der Polymerzusammensetzung. Dabei wird durch das Beaufschlagen der Polymerzusammensetzung mit dem Medium der Fremdstoff zumindest teilweise in eine Form umgewandelt, die ein Entfernen aus der Polymerzusammensetzung erleichtert. Somit kann der umgewandelte Fremdstoff schneller und effektiver aus der Polymerzusammensetzung abgetrennt werden, als dies bei dem ursprünglichen, nicht-umgewandelten Fremdstoff der Fall ist. Dadurch lässt sich auch der energetische und apparative Aufwand für das Abtrennen des Fremdstoffs reduzieren.

Bevorzugt ist der umgewandelte Fremdstoff ausgewählt aus der Gruppe, umfassend ein Zersetzungsprodukt des ursprünglichen Fremdstoffs, eine energetisch angeregte Form des ursprünglichen Fremdstoffs, eine chemisch modifizierte Form des ursprünglichen Fremdstoffs, oder Mischungen davon. Die vorliegende Erfindung betrifft also insbesondere ein Verfahren, bei dem die Polymerzusammensetzung mit einem Medium beaufschlagt wird, das in der Lage ist, den Fremdstoff zu zersetzen, in eine energetische angeregte Form umzuwandeln, oder chemisch zu modifizieren. Diese so umgewandelten Fremdstoffe können leichter und schneller aus der Polymerzusammensetzung entfernt werden.

Das Entfernen erfolgt insbesondere durch Diffusion des umgewandelten Fremdstoffs aus der Polymerzusammensetzung. Dabei hat der umgewandelte Fremdstoff einen größeren Diffusionskoeffizient in Bezug auf die Polymerzusammensetzung als der ursprüngliche Fremdstoff aufweist. Insbesondere ist bevorzugt, dass das Verhältnis des Diffusionskoeffizienten des umgewandelten Fremdstoffs D₂ zum Diffusionskoeffizienten des ursprünglichen Fremdstoffs D₁ (D₂/D₁) bevorzugt 2 oder mehr, mehr bevorzugt 5 oder mehr, besonders bevorzugt 10 oder mehr, ist. Der Begriff "Diffusionskoeffizient" bezieht sich auf den Diffusionskoeffizient bei der Entfernungstemperatur, d.h. bei der Temperatur die beim Schritt des Entfernens des umgewandelten Fremdstoffs aus der Polymerzusammensetzung vorliegt. Das Bestimmen von Diffusionskoeffizienten ist im Stand der Technik bekannt und wird hier nicht weiter erläutert. Durch die beschleunigte Diffusion des umgewandelten Fremdstoffs aus der Polymerzusammensetzung kann die Entfernung des Fremdstoffs aus der Polymerzusammensetzung leichter und schneller erfolgen. Dies lässt sich dadurch erklären, dass der Diffusionskoeffizient maßgeblich von der Größe und der Polarität des Fremdstoffs abhängt, wobei diese Faktoren durch den Schritt des Beaufschlagens mit dem Medium so verändert werden, dass sich der Diffusionskoeffizient erhöht und dadurch die Diffusion beschleunigt abläuft.

In einer bevorzugten Ausführungsform der vorliegenden Erfindung ist das Medium elektromagnetische Strahlung. Diese elektromagnetische Strahlung wird vom Fremdstoff absorbiert, wobei dadurch bevorzugt der Fremdstoff zersetzt wird, in eine energetische angeregte Form umgewandelt wird, oder chemisch modifiziert wird. Dabei ist insbesondere vorteilhaft, dass die elektromagnetische Strahlung so ausgewählt wird, dass der Fremdstoff einen höheren Absorptionskoeffizienten besitzt als das Polymer, um eine vermehrte Absorption des Fremdstoffs im Vergleich zum Polymer zu erzielen. Weiter ist bevorzugt, dass das Verhältnis des Absorptionskoeffizienten des ursprünglichen Fremdstoffs A_{F} zum Absorptionskoeffizienten der Polymerzusammensetzung A_{P} (A_{F}/A_{P}) bezüglich der elektromagnetischen Strahlung 2 oder mehr, bevorzugt 5 oder mehr, besonders bevorzugt 10 oder mehr, ist. Der Begriff "Absorptionskoeifizient" bezieht sich auf den Absorptionskoeffizient bei einer Temperatur, die beim Schritt des Beaufschlagens der Polymerzusammensetzung mit dem Medium vorliegt. Insbesondere ist die Temperatur Raumtemperatur, d.h. 20°C. Die Bestimmung von Absorptionskoeffizienten ist im Stand der Technik bekannt und wird hier nicht weiter erläutert.

Falls die elektromagnetische Strahlung Mikrowellenstrahlung ist, ist die relevante Kenngröße nicht der Absorptionskoeffizient sondern der dielektrische Verlustfaktor ε". Dabei ist zu beachten, dass die Mikrowellenstrahlung so ausgewählt wird, dass der Fremdstoff einen höheren dielektrischen Verlustfaktor besitzt als das Polymer, um eine vermehrte Anregung des Fremdstoffs im Vergleich zum Polymer zu erzielen. Insbesondere ist bevorzugt, dass das Verhältnis des dielektrischen Verlustfaktors des ursprünglichen Fremdstoffs ε"_{F} zum dielektrischen Verlustfaktor der Polymerzusammensetzung ε"_{P} (ε"_{F}/ε"_{P}) bezüglich der Mikrowellenstrahlung 2 oder mehr, bevorzugt 5 oder mehr, besonders bevorzugt 10 oder mehr, ist. Der Begriff "Dielektrischer Verlustfaktor (ε")" bezieht sich auf den ε" bei einer Temperatur, die beim Schritt des Beaufschlagens der Polymerzusammensetzung mit dem Medium vorliegt. Insbesondere ist die Temperatur Raumtemperatur, d.h. 20°C. Die Bestimmung von dielektrischen Verlustfaktoren ist im Stand der Technik bekannt und wird hier nicht weiter erläutert.

Bevorzugt wird die elektromagnetische Strahlung ausgewählt aus der Gruppe, umfassend Gammastrahlung, Röntgenstrahlung, UV-Strahlung, IR Strahlung, oder Mikrowellenstrahlung. Besonders bevorzugt ist IR Strahlung. Dabei kann die elektromagnetische Strahlung einen Wellenlängenbereich umfassen, d.h. eine Strahlung sein, die einen Bereich von unterschiedlichen Wellenlängen umfasst. Insbesondere betrifft die vorliegende Erfindung aber das Einstrahlen von elektromagnetischer Strahlung mit einer spezifischen Wellenlänge, d.h. von monochromatischer Strahlung. Dies hat den Vorteil, dass spezifisch Wellenlängen eingestrahlt werden können, bei denen der Fremdstoff besser angeregt wird als das Polymer. Strahler die einen Wellenlängenbereich emittieren, sowie monochromatische Strahler, die eine definierte Wellenlänge emittieren, sind für viele Wellenlängenbereiche bekannt. Für optische, monochromatische Strahlungsquellen werden erfindungsgemäß bevorzugt Laser oder Monochromatoren mit Prismagitterreflexion verwendet. Für Mikrowellenstrahlung wird bevorzugt eine Frequenz von 2,45 GHz verwendet.

Die Wellenlänge der elektromagnetischen Strahlung ist an sich nicht kritisch, wird aber insbesondere so ausgewählt, dass die oben genannten Bedingungen erfüllt sind, d.h. dass der Fremdstoff besser angeregt wird als das Polymer. Für die Auswahl der Wellenlänge bzw. des Wellenlängenbereich erfolgt also insbesondere ein Vergleich der Absorptionsspektren des Polymers und des Fremdstoffs, der in der Polymerzusammensetzung vorliegt, wobei die Wellenlänge der elektromagnetischen Strahlung so gewählt wird, dass das Polymer einen möglichst geringen Absorptionskoeffizienten besitzt, während der Fremdstoff einen möglichst hohen Absorptionskoeffizienten besitzt. Analoges gilt für den dielektrischen Verlustfaktor bei Mikrowellenstrahlung.

Bei PET Flakes als Polymerzusammensetzung ist zum Beispiel eine geeignete elektromagnetische Strahlung IR Strahlung im Bereich von 2700 bis 1750 cm⁻¹, da PET vornehmlich im Bereich bis 3000 cm⁻¹ und von 1750 bis 750 cm⁻¹ absorbiert. Weiter zeigen im Bereich von 2700 bis 1750 cm⁻¹ viele organische Fremdstoffe, wie z.B. Toluol oder Benzophenon, Schwingungsbanden. Diese Fremdstoffe können so bevorzugt angeregt werden (d.h. besser als das PET), was die Diffusion aus der Polymerzusammensetzung beschleunigt, und so ein schnelleres und effektiveres Entfernen dieser Fremdstoffe ermöglicht.

Alternativ oder in Kombination dazu kann im vorliegenden Verfahren das Medium ein chemisches Reagenz sein. Bevorzugt ist das chemische Reagenz ein Oxidationsmittel, wie Wasserstoffperoxid oder Peressigsäure. Weiter kann das chemische Reagenz ein Reduktionsmittel, wie Wasserstoff sein. Eine solche Ausführungsform wird insbesondere dann gewählt, wenn die Fremdstoffe empfänglicher gegenüber dem chemischen Reagenz, d.h. insbesondere empfänglicher gegenüber Oxidation oder Reduktion sind, als die Polymerzusammensetzung. Weiter kann das chemische Reagenz eine Säure oder eine Base sein, d.h. eine pH-Wert Änderung in der Polymerzusammensetzung induzieren. Bei der Behandlung der Polymerzusammensetzung mit dem chemischen Reagenz erfolgt eine chemische Reaktion des Fremdstoffs mit dem chemischen Reagenz. Dabei wird bevorzugt der Fremdstoff zersetzt, in eine energetische angeregte Form umgewandelt, oder chemisch modifiziert, wobei sich der so umgewandelte Fremdstoff leichter und schneller aus der Polymerzusammensetzung entfernen lässt als der ursprüngliche Fremdstoff.

Erfindungsgemäß sind Polymerzusammensetzungen umfasst, die ein Polymer oder eine Mischung aus mehreren Polymeren als Hauptbestandteil aufweisen. Insbesondere ist das Polymer ausgewählt aus der Gruppe, umfassend Polyester, Polyolefine, Polystyrole, Polyamide oder Polycarbonate, bevorzugt PET oder Copolymere davon. Insbesondere ist die Polymerzusammensetzung zu recycelndes Flaschenmaterial, bevorzugt PET Flakes.

Das Verfahren kann auf alle Fremdstoffe angewendet werden, die in Polymerzusammensetzungen vorliegen. Beispiele für Fremdstoffe sind anorganische oder organische Substanzen, wie Füllstoffe, Pigmente, Barrierematerialien, Flammschutzmittel, Verstärkungsmittel, usw. Weiter umfasst sind Fremdstoffe, die während der Herstellung, Verwendung, oder während des Recyclingprozesses in die Polymerzusammensetzung gelangen oder sich dort anreichern. Insbesondere kann der Fremdstoff ein organisches Material sein, das bevorzugt ausgewählt ist aus der Gruppe umfassend aliphatische Kohlenwasserstoffe, halogenierte Kohlenwasserstoffe, aromatische Kohlenwasserstoffe, oder substituierte Derivate davon. Insbesondere kann der Fremdstoff ausgewählt sein aus der Gruppe, umfassend C₃-C₂₀, lineare, verzweigte oder cyclische Kohlenwasserstoffe, C₆-C₂₀ aromatische Kohlenwasserstoffe, die optional mit einem oder mehr Heteroatomen substituiert sind. Heteroatome sind insbesondere Sauerstoff, Stickstoff oder Halogene. Beispiele für Fremdstoffe sind ausgewählt aus der Gruppe, umfassend Acetaldehyd, Chloroform, Toluol, Phenylcyclohexan, Benzophenon, oder Mischungen davon.

Die Erfindung betrifft weiter eine Vorrichtung zum Entfernen eines Fremdstoffs aus einer Polymerzusammensetzung, umfassend ein Mittel zum Beaufschlagen der Polymerzusammensetzung mit einem Medium, ausgewählt aus der Gruppe umfassend chemische Reagenzien, Elektronenstrahlung, elektromagnetische Strahlung, oder Mischungen davon, sowie ein Mittel zum Entfernen des umgewandelten Fremdstoffs aus der Polymerzusammensetzung. Dabei wird durch das Mittel zum Beaufschlagen mit dem Medium der Fremdstoff zumindest teilweise in eine Form umgewandelt wird, die ein Entfernen aus der Polymerzusammensetzung erleichtert. Somit kann die Vorrichtung den umgewandelte Fremdstoff schnellere und effektiver aus der Polymerzusammensetzung abtrennen, als dies bei dem ursprünglichen, nicht-umgewandelten Fremdstoff der Fall ist. Dadurch lässt sich die Vorrichtung mit einem geringeren energetischen und apparativen Aufwand betreiben.

Bevorzugt ist das Mittel zum Beaufschlagen der Polymerzusammensetzung eine chemische Behandlungsanlage, wie eine Waschanlage oder eine Sprühanlage, wenn das Medium ein chemisches Reagenz ist. Weiter kann das Mittel eine Elektronenbestrahlungsanlage sein, wenn das Mittel Elektronenstrahlung ist. Das Mittel kann eine Bestrahlungsanlage sein, wenn das Medium elektromagnetische Strahlung ist.

Bevorzugt ist das Mittel zum Entfernen der Zersetzungsprodukte des Fremdstoffs aus der Polymerzusammensetzung ausgewählt ist aus der Gruppe, umfassend eine Lösemittelbehandlungsvorrichtung, eine Vakuumvorrichtung, eine Heizvorrichtung, oder Mischungen davon.

Die Erfindung betrifft auch die Verwendung eines Mediums, ausgewählt aus der Gruppe umfassend chemische Reagenzien, Elektronenstrahlung, elektromagnetische Strahlung, oder Mischungen davon, in einem Verfahren oder in einer Vorrichtung zum Entfernen eines Fremdstoffs aus einer Polymerzusammensetzung, wobei der Fremdstoff durch Beaufschlagen der Polymerzusammensetzung mit dem Medium zumindest teilweise in eine Form umgewandelt wird, die ein Entfernen aus der Polymerzusammensetzung erleichtert.

Die bevorzugten Ausführungsformen, die in Bezug auf das Verfahren beschrieben sind, gelten auch für die Vorrichtung bzw. die Verwendung.

## Patentansprüche

1. Verfahren zum Entfernen eines Fremdstoffs aus einer Polymerzusammensetzung, umfassend die Schritte: Beaufschlagen der Polymerzusammensetzung mit einem Medium, ausgewählt aus der Gruppe, umfassend chemische Reagenzien, Elektronenstrahlung, elektromagnetische Strahlung, oder Mischungen davon; Entfernen des umgewandelten Fremdstoffs aus der Polymerzusammensetzung, **dadurch gekennzeichnet, dass** durch das Beaufschlagen der Polymerzusammensetzung mit dem Medium der Fremdstoff zumindest teilweise in eine Form umgewandelt wird, die ein Entfernen aus der Polymerzusammensetzung erleichtert.

2. Verfahren nach Anspruch 1, **dadurch gekennzeichnet, dass** der umgewandelte Fremdstoff ausgewählt ist aus der Gruppe, umfassend ein Zersetzungsprodukt des ursprünglichen Fremdstoffs, eine energetisch angeregte Form des ursprünglichen Fremdstoffs, eine chemisch modifizierte Form des ursprünglichen Fremdstoffs, oder Mischungen davon.

3. Verfahren nach Anspruch 1 oder 2, **dadurch gekennzeichnet, dass** der Schritt des Entfernens des umgewandelten Fremdstoffs durch Diffusion aus der Polymerzusammensetzung erfolgt, wobei der umgewandelte Fremdstoff einen größeren Diffusionskoeffizient in Bezug auf die Polymerzusammensetzung als der ursprüngliche Fremdstoff aufweist, wobei das Verhältnis des Diffusionskoeffizienten des umgewandelten Fremdstoffs D₂ zum Diffusionskoeffizienten des ursprünglichen Fremdstoffs D1 (D₂/D₁) bevorzugt 2 oder mehr, mehr bevorzugt 5 oder mehr, besonders bevorzugt 10 oder mehr, ist.

4. Verfahren nach einem der Ansprüche 1 bis 3, **dadurch gekennzeichnet, dass** das Medium elektromagnetische Strahlung ist, wobei das Verhältnis des Absorptionskoeffizienten des ursprünglichen Fremdstoffs A_{F} zum Absorptionskoeffizienten der Polymerzusammensetzung A_{P} (A_{F}/A_{P}) bezüglich der elektromagnetischen Strahlung 2 oder mehr, bevorzugt 5 oder mehr, besonders bevorzugt 10 oder mehr, ist.

5. Verfahren nach Anspruch 4, **dadurch gekennzeichnet, dass** die elektromagnetische Strahlung ausgewählt ist aus der Gruppe, umfassend Gammastrahlung, Röntgenstrahlung, UV-Strahlung, IR Strahlung, oder Mikrowellenstrahlung, bevorzugt IR Strahlung.

6. Verfahren nach Anspruch 4 oder 5, **dadurch gekennzeichnet, dass** die elektromagnetische Strahlung IR-Strahlung, bevorzugt monochromatische IR-Strahlung ist.

7. Verfahren nach Anspruch 1 bis 3, **dadurch gekennzeichnet, dass** das Medium ein chemisches Reagenz umfasst, wobei das chemische Reagenz bevorzugt ausgewählt ist aus der Gruppe umfassend Oxidationsmittel, wie Wasserstoffperoxid oder Peressigsäure, Reduktionsmittel, wie Wasserstoff, Säuren oder Basen.

8. Verfahren nach einem der Ansprüche 1 bis 7, **dadurch gekennzeichnet, dass** die Polymerzusammensetzung als Hauptbestandteil ein Polymer enthält, das ausgewählt ist aus der Gruppe, umfassend Polyester, Polyolefine, Polystyrole, Polyamide oder Polycarbonate, insbesondere PET oder Copolymere davon.

9. Verfahren nach einem der Ansprüche 1 bis 8, **dadurch gekennzeichnet, dass** die Polymerzusammensetzung zu recycelndes PET Flaschenmaterial, bevorzugt PET Flakes, ist.

10. Verfahren nach einem der Ansprüche 1 bis 9, **dadurch gekennzeichnet, dass** der Fremdstoff ein organisches Material ist, bevorzugt ausgewählt aus der Gruppe umfassend aliphatische Kohlenwasserstoffe, halogenierte Kohlenwasserstoffe, aromatische Kohlenwasserstoffe, oder substituierte Derivate davon.

11. Verfahren nach einem der Ansprüche 1 bis 10, **dadurch gekennzeichnet, dass** der Fremdstoff ausgewählt ist aus der Gruppe, umfassend C₃-C₂₀, lineare, verzweigte oder cyclische Kohlenwasserstoffe, C₆-C₂₀ aromatische Kohlenwasserstoffe, die optional mit einem oder mehr Heteroatomen substituiert sind.

12. Vorrichtung zum Entfernen eines Fremdstoffs aus einer Polymerzusammensetzung, umfassend: ein Mittel zum Beaufschlagen der Polymerzusammensetzung mit einem Medium, ausgewählt aus der Gruppe umfassend chemische Reagenzien, Elektronenstrahlung, elektromagnetische Strahlung, oder Mischungen davon, sowie ein Mittel zum Entfernen des umgewandelten Fremdstoffs aus der Polymerzusammensetzung, **dadurch gekennzeichnet, dass** durch das Mittel zum Beaufschlagen der Polymerzusammensetzung mit dem Medium der Fremdstoff zumindest teilweise in eine Form umgewandelt wird, die ein Entfernen aus der Polymerzusammensetzung erleichtert.

13. Vorrichtung nach Anspruch 12, **dadurch gekennzeichnet, dass** das Mittel zum Beaufschlagen der Polymerzusammensetzung eine chemische Behandlungsanlage, wie eine Waschanlage oder eine Sprühanlage, ist, wenn das Medium ein chemisches Reagenz ist, oder dass das Mittel eine Elektronenbestrahlungsanlage ist, wenn das Mittel. Elektronenstrahlung ist, oder dass das Mittel eine Bestrahlungsanlage ist, wenn das Mittel elektromagnetische Strahlung ist.

14. Vorrichtung nach Anspruch 12 oder 13, **dadurch gekennzeichnet, dass** das Mittel zum Entfernen der Zersetzungsprodukte des Fremdstoffs aus der Polymerzusammensetzung ausgewählt ist aus der Gruppe, umfassend ein Lösemittelbehandlungsvorrichtung, eine Vakuumvorrichtung, eine Heizvorrichtung, oder Mischungen davon.

15. Verwendung eines Mediums, ausgewählt aus der Gruppe umfassend chemische Reagenzien, Elektronenstrahlung, elektromagnetische Strahlung, oder Mischungen davon, in einem Verfahren oder in einer Vorrichtung zum Entfernen eines Fremdstoffs aus einer Polymerzusammensetzung, **dadurch gekennzeichnet, dass** der Fremdstoff durch Beaufschlagen der Polymerzusammensetzung mit dem Medium zumindest teilweise in eine Form umgewandelt wird, die ein Entfernen aus der Polymerzusammensetzung erleichtert.
